# EUROPÄISCHE PATENTSCHRIFT

(11) **EP 1 253 822 B1**
(45) Veröffentlichungstag und Bekanntmachung des Hinweises auf die Patenterteilung: **04.06.2003**
(21) Anmeldenummer: 01907344.4
(22) Anmeldetag: 11.01.2001
(51) Int. Cl.: A01K 27/00, A47D 13/08

(54) **HALTE- UND FÜHRUNGSVORRICHTUNG**
RETAINING AND GUIDING DEVICE
DISPOSITIF DE RETENUE ET DE MENEE

(30) Priorität: 10.02.2000 DE 20002421 U; 15.03.2000 DE 10012699; 13.09.2000 DE 10045493
(43) Veröffentlichungstag der Anmeldung: 06.11.2002
(73) Patentinhaber: Fountoulakis, Tzanis, 32107 Bad Salzuflen (DE)
(72) Erfinder: Fountoulakis, Tzanis, 32107 Bad Salzuflen (DE)
(74) Vertreter: Rolf, Gudrun
(86) Internationale Anmeldenummer: DE0100085
(87) Internationale Veröffentlichungsnummer: WO01058253

(56) Entgegenhaltungen:
- CA-A- 1 334 365
- FR-A- 2 683 428
- US-A- 5 161 486
- US-A- 5 379 726

## Beschreibung

Die Erfindung betrifft eine Halte- und Führungsvorrichtung gemäß dem Oberbegriff des Hauptanspruches, insbesondere jedoch für einen Hund oder einen anderen Vierbeiner aber auch als Brustgeschirr eines das Laufen erlernenden Kindes.

Bekannte Hundehalsbänder bestehen aus einem über einen Verschluss im Umfang an den Hals eines Hundes anpassbaren Ring aus wenig elastischem Material oder auch aus Kettengliedern, die schlaufenförmig so durch einen Stahlring geführt sind, dass sich bei einem starken Zug des Hundes an der Kette die Schlaufe um dessen Hals verengt. Solche Hundehalsbänder weisen weiterhin Ösen auf, an denen Hundeleinen mittels Haken befestigt werden können.

Problematisch ist, dass Hunde zwar gewöhnlich ein Halsband oder auch ein Brustgeschirr tragen, dass jedoch der Hundehalter oftmals keine Leine zur Verfügung hat oder das Anbringen einer solchen für kurze Momente als für zu umständlich betrachtet und das Anleinen deswegen unterlässt, wie z.b. beim Ein- oder Aussteigen aus einem Kraftfahrzeug oder beim Führen eines Hundes in einem Gebäude. Dann muss der Hundehalter das Tier jedoch unmittelbar am Halsband oder dem Brustgeschirr führen, was diesem durch die geringere Körpergröße des Tieres oftmals nur unter körperlichen Mühen gelingt.

Ein bekannte Führungsvorrichtung für Tiere, CA 1 334 365 A, weist von auf zwei seitlich an einem Halsband angeordneten Trommeln davon gegen eine Federkraft abspulbare Ketten auf, die mit einem Handgriff miteinander verbunden sind, wobei diese mechanische Vorrichtung den Nachteil aufweist, dass es beim Aufrollen zu Fehlfunktionen kommen kann, beispielsweise zum Abspringen einer Kette von einer Trommel, und dass sich auch sonst anfällig ist gegen mechanische Beeinträchtigungen und Verschmutzung.

Aufgabe der Erfindung ist es, eine Halte- und Führungsvorrichtung zur Verfügung zu stellen welche als Leinenersatz dienen kann und ständig mitgeführt wird, ohne Mensch oder Tier zu behindern und die dauerhaft eine sichere Funktion gewährleistet.

Die Lösung dieser Aufgabe wird in Verbindung mit den Oberbegriffsmerkmalen erfindungsgemäß durch die im kennzeichnenden Teil des Hauptanspruches angegebene technische Lehre vermittelt.

Dadurch, dass die Halte- und Führungsvorrichtung, eventuell neben anderen Riemen, ein nach innen gerichtetes Innenband und ein außen darüber geführtes Außenband aufweist, wobei das Außenband gegen eine Rückstellkraft elastische verlängerbar oder ausziehbar ausgebildet ist, wird zum einen ein festes Halsband oder Brustgeschirr verwirklicht, welches sich ein Hund oder anderes damit ausgestattetes Tier nicht abstreifen kann und zum anderen wird die Möglichkeit geschaffen, den Hund auch ohne Leine an dem sich verlängernden Außenband bequem führen zu können, ohne dass sich der Hundehalter in eine unbequeme Körperhaltung begeben muss oder dass sich das Halsband im Durchmesser verengt und das Tier würgt, wie dies bei den bekannten Schlaufenhalsbändern der Fall ist. Mit dieser Vorrichtung wird gleichzeitig dort, wo Leinenzwang herrscht, den entsprechenden Vorschriften Genüge getan.

Weiterhin ist bei der neuen Halte- und Führungsvorrichtung das Außenband als elastisches Band oder als flacher elastischer Schlauch ausgebildet, welches sich im unbenutzten Zustand unter leichter Vorspannung leicht gedehnt an das Innenband anlegt, sodass es den Hund nicht stört und keine Schlaufen bildet, an denen ein Tier hängen bleiben und sich dadurch verletzen könnte.

Von besonderem Vorteil ist weiterhin, dass ein Teil des Außenbandes in einer Außenhülle verläuft, die mit dem Innenband verbunden ist. Dadurch kann auch die Außenhülle aus robustem Material, wie beispielsweise Leder oder aus widerstandskräftigem Kunststoff hergestellt und das elastische Außenband vor mechanischen Beeinflussungen wie Beißversuchen oder vor Verschmutzung geschützt werden.

Gemäß einer besonders einfachen Ausführungsform der Erfindung besteht ein solches elastisches Band vorzugsweise aus einem Gummi- oder Stretchband, welches auf Dauer reißfest und elastisch bleibt.

Von besonderem Vorteil ist weiterhin, dass die Dehnung des elastischen Außenbandes von der eine geringe Vorspannung erzeugenden Anfangsdehnung aus bei nur leicht steigender Zugkraft in einem ersten Dehnungsbereich sehr groß ist und in einem Endbereich der maximalen Dehnbarkeit des Außenbandes bis zur Dehngrenze hin stark abnimmt. Damit wird beispielsweise sichergestellt, dass zunächst eine Längenanpassung zwischen einem stehenden Hund und einem stehenden Menschen erreicht wird, ohne dass dabei bereits große Haltekräfte auf den Menschen oder den Hund einwirken. Bei Erreichen der Dehngrenze nimmt die Dehnung zwar stark aber vor allen Dingen ruckfrei ab, sodass sich auch in dieser Hinsicht die körperliche Belastung eines Halters weiter deutlich reduziert.

Vorteilhaft ist gemäß einer weiteren Neuerung, dass die Dehnungsfähigkeit und das Dehnungsverhalten des elastischen Außenbandes an die Größe und/oder das Gewicht eines Tieres angepasst ausgebildet sind, sodass für kleine leichte Hunde im ersten Dehnungsbereich nur eine geringe Kraft für die Anfangsdehnung erforderlich ist, die Dehnungsfähigkeit dagegen umso größer ausgebildet ist, wohingegen für große schwere Hunde auch bereits im ersten Dehnungsbereich eine größere Kraft für die Anfangsdehnung erforderlich ist, die Dehnungsfähigkeit dagegen geringer ausfällt als bei Halte- und Führungsvorrichtungen für kleine Hunde, um trotz der vermeintlichen Nachgiebigkeit der Vorrichtung sofort eine wirkungsvolle Kontrolle auf einen Hund ausüben zu können.

Wesentlich ist bei einer Außenhülle aus Kunststoffgewebe eine Ausführungsform der Erfindung die einen Rand aufweist, der im Austrittsbereich des Außenbandes heißversiegelt ist, sodass dort eine glatte, widerstandsfähige Öffnung für das bei Benutzung sich ständig heraus und wieder zurück bewegende Außenband zur Verfügung gestellt wird. Da es bei einer Ausführungsform der erfinderischen Vorrichtung aus Leder zu einer verstärkten Reibung und damit Verschleiß zwischen Innenband, Außenband oder Außenhülle kommen kann, ist eine weitere bevorzugte Ausführungsform der Erfindung mindestens an einigen jener Flächen, die sich mit dem elastischen Außenband in Gleitkontakt befinden, mit einer gleitfähigen Schicht oder Beschichtung versehen.

Vorteilhaft ist weiterhin die Verwendung eines Handgriffes, der entweder zwischen zwei Teilstücken des Außenbandes eingesetzt ist oder um eine Außenband herum angeordnet ist, wobei die verbleibenden Teilstücke bei einem dazwischengesetzten Handgriff das Maß der möglichen Verlängerung gegenüber einer Version, bei der der Handgriff frei um das Außenband herumgeführt ist, wesentlich verringern, was jedoch je nach gewünschter Verwendung für große oder kleine Tiere mehr oder weniger vorteilhaft ausgenutzt werden kann. Der Handgriff selbst verbessert die Handhabung der Halte- und Führungsvorrichtung deutlich und dient ebenfalls dem Schutz des Außenbandes,

Das Hundehalsband bzw. ein Brustgeschirr ist bevorzugterweise mit einem Verschluss ausgestattet, über den es an verschiedene Halsweiten oder Brustumfänge anpassbar ist, wobei die Enden des Außenbandes möglichst nah im Bereich dieses Verschlusses angeordnet sind, um eine möglichst große wirksame Länge des elastischen Außenbandes zu erhalten.

Gemäß einer anderen vorteilhaften Ausführungsform eines Hundeshalsbandes kann dieses jedoch auch geschlossen ausgebildet sein, sodass es einfach über den Kopf eines Hundes übergestreift werden kann.

Als zusätzlicher Vorteil ist eine über den Umfang des Hundehalsbandes verstellbare Schnalle anzusehen, mit der das Innenband und das Außenband gegeneinander festgelegt werden können, sodass das Maß der maximalen Verlängerbarkeit über die noch freie Länge des Teilstückes des Außenbandes bestimmt werden kann.

Gemäß einer weiterem bevorzugten Ausführungsform der Halte- und Führungsvorrichtung ist diese als Laufgeschirr eines das Laufen erlernenden Kleinkindes ausgeführt, wobei das Kleinkind bei einem Sturz nicht ruckweise, sondern sanft von dem elastischen Band aufgefangen wird. Bei Nichtgebrauch kann das Kind ohne wesentliche Behinderung in seiner Bewegungsfreiheit weiter krabbeln oder spielen, da keine störenden Teile wie Leinen oder Halteschlaufen am Laufgeschirr angeordnet sind.

Nachfolgend ist ein Ausführungsbeispiel der Erfindung anhand der Zeichnung näher beschrieben. Es zeigen:
- Fig. 1: eine 3-D-Ansicht einer als Hundehalsband ausgeführten Halte- und Führungsvorrichtung,
- Fig. 2: einen Schnitt durch einen Handgriff mit frei hindurch geführtem Außenband,
- Fig. 3: eine Schnitt durch das Hundehalsband gemäß Fig. 1 und
- Fig. 4: eine 3-D-Ansicht einer als Brustgeschirr ausgeführten Halte- und Führungsvorrichtung.

Das Hundehalsband bzw. ein Brustriemen 7 des Brustgeschirrs besteht aus einem inneren Innenband 1;11 und einer an dessen Rändern damit vernähten Außenhülle 3;13. Dazwischen ist ein elastisches Außenband 2;12 gelagert, welches sich in einem Teilbereich des Hundehalsbandes ohne Außenhülle 3;13 von einer Person mit einer Hand ergreifen und ausziehen lässt. In diesem Bereich ist das Außenband 2; 12 mit einem Handgriff 4;14 umgeben, durch den sich das Außenband 2;12 frei hindurch erstreckt, um ein möglichst großes Maß an wirksamer Länge des elastischen Außenbandes 2;12 zu erhalten. Die Enden des Außenbandes 2;12 können jedoch auch an einem Handgriff 4; 14 angenäht sein.

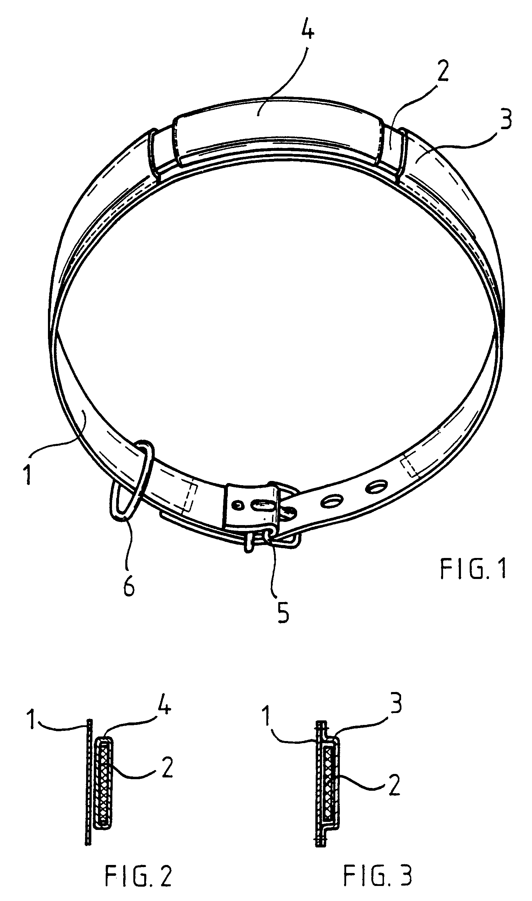

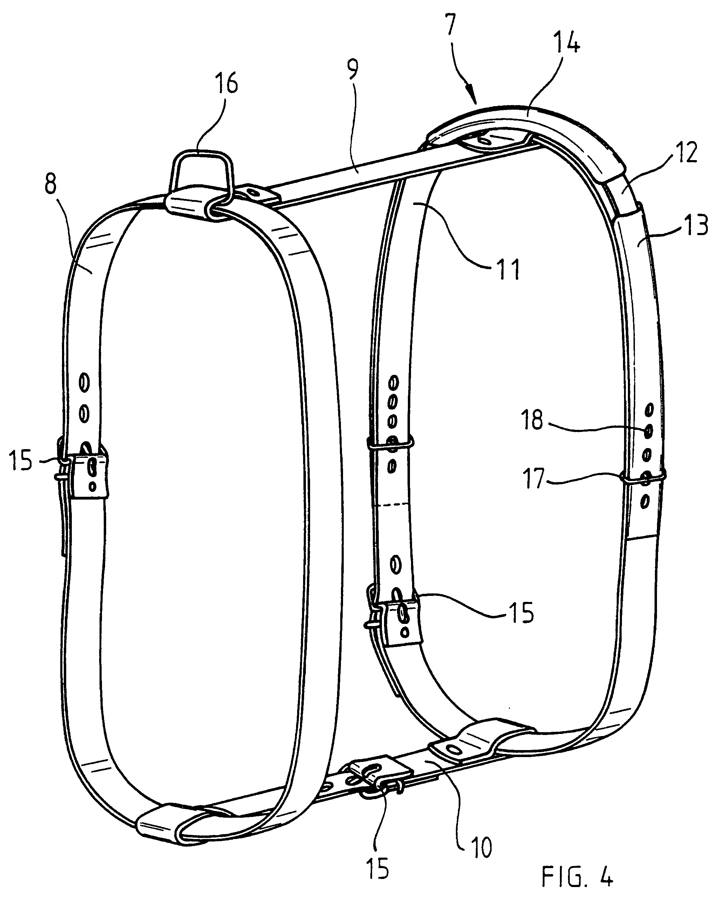

Das Hundehalsband gemäß Fig. 1 weist weiterhin einen verstellbaren Verschluss 5 sowie eine Öse 6 zur Befestigung einer konventionellen Hundeleine auf. Das Brustgeschirr gemäß Fig. 4 besitzt ebenfalls einen Verschluss 15 und eine Öse 16 sowie zusätzlich einen Halsriemen 8 und dazwischen angeordnete Verbindungsstege 9,10 zwischen Brustriemen 7 und Halsriemen 8, wobei dort, wo erforderlich, weitere Verschlüsse 15 eingesetzt sind.

Wie in Fig. 2 dargestellt, erstreckt sich das elastische Außenband 2 durch einen es umgebenden Handgriff 4, sodass die wirksame Länge des Auβenbandes 2 optimiert ist.

In Fig. 3 ist dargestellt, wie das Außenband 2 frei zwischen Innenband 1 und Außenhülle 3 gehalten ist. Die zum Außenband 2 gerichteten Seiten des Innenbandes 1 und der Außenhülle 3 sind insbesondere bei einer Ausführung der Halte- und Führungsvorrichtung aus Leder mit einer gleitfähigen Schicht oder Beschichtung versehen.

Die Halte- und Führungsvorrichtung weist, wie in Fig. 4 dargestellt, Durchbrechungen 18 des Innenbandes 11 und der Außenhülle 13 sowie eine über ihren Umfang verstellbare Schnalle 17 auf, mit der das Innenband 11 und das Außenband 12 gegeneinander festlegbar sind, wodurch das Maß der maximalen Verlänger- oder Ausziehbarkeit in Abhängigkeit von dem noch freien Teilstück des Außenbandes 2 wahlfrei eingestellt werden kann

Nicht zeichnerisch dargestellt ist eine Ausführungsform der Erfindung, bei der alternativ nur der vordere Halsriemen 8 oder auch gemeinsam mit dem Brustriemen 7 beide mit einem elastischen Außenband 12 versehen sein könnten, wobei der Handgriff 14 entweder am vorderen Halsriemen 8 angeordnet oder aber auch selber als Verbindungssteg 9 ausgeführt sein könnte. Oberhalb eines Verbindungssteges 9 nach Fig. 4 könnte weiterhin ein dort platzierter Handgriff 14 elastisch gelagert sein.

## Patentansprüche

1. Halte- und Führungsvorrichtung, insbesondere für einen Hund oder einen anderen Vierbeiner, aus mindestens einem einen Hals oder eine Brust umschlingenden Band, wobei die Vorrichtung ein nach innen gerichtetes Innenband (1;11) und ein außen darüber geführtes Außenband (2;12) aufweist, **dadurch gekennzeichnet, dass** das Außenband (2;12) als elastisches Band oder als elastischer Schlauch und gegen eine Rückstellkraft elastisch verlängerbar ausgebildet ist und dass das Außenband (2;12) über einen Teil des Umfanges des Innenbandes (1;11) in einer Außenhülle (3;13) verläuft, die mit dem Innenband (1;11) verbunden ist.

2. Halte- und Führungsvorrichtung nach Anspruch 1, **dadurch gekennzeichnet, dass** das elastische Außenband (2;12) aus Gummi oder Stretch besteht.

3. Halte- und Führungsvorrichtung nach einem der vorgenannten Ansprüche, **dadurch gekennzeichnet, dass** die Dehnung des elastischen Außenbandes (2;12) von einer eine geringe Vorspannung erzeugenden Anfangsdehnung aus bei nur leicht steigender Zugkraft in einem ersten Dehnungsbereich sehr groß ist und im Endbereich der maximalen Dehnbarkeit des Außenbandes (2;12) bis zur Dehngrenze stark abnimmt.

4. Halte- und Führungsvorrichtung nach einem der vorgenannten Ansprüche, **dadurch gekennzeichnet, dass** die Dehnungsfähigkeit und das Dehnungsverhalten des elastischen Außenbandes (2;12) an die Größe und/oder das Gewicht eines Tieres angepasst ausgebildet ist.

5. Halte- und Führungsvorrichtung nach einem der vorgenannten Ansprüche, **dadurch gekennzeichnet, dass** die Außenhülle (3;13) aus Kunststoffgewebe besteht welches einen Rand aufweist, der im Austrittsbereich des Außenbandes (2;12) heißversiegelt ist.

6. Halte- und Führungsvorrichtung nach einem der vorgenannten Ansprüche, **dadurch gekennzeichnet, dass** mindestens einige Flächen des Innenbandes (1;11) und/oder der Außenhülle (3;13), welche sich mit dem elastischen Außenband (2;12) in Kontakt befinden, mit einer gleitfähigen Schicht oder Beschichtung versehen sind.

7. Halte- und Führungsvorrichtung nach einem der vorgenannten Ansprüche, **dadurch gekennzeichnet, dass** zwischen Teilstücken des Außenbandes (2;12) oder um ein Teilstück des Außenbandes (2;12) herum ein Handgriff (4;14) angeordnet ist.

8. Halte- und Führungsvorrichtung nach einem der vorgenannten Ansprüche, **dadurch gekennzeichnet, dass** sie einen Verschluss (5;15) aufweist und die Enden des Außenbandes (2;12) im Bereich des Verschlusses (5;15) am Innenband (1;11) festgelegt sind.

9. Halte- und Führungsvorrichtung nach einem der vorgenannten Ansprüche, **dadurch gekennzeichnet, dass** sie Durchbrechungen (18) in ihrem Innenband (1;11) und/oder in ihrer Außenhülle (3;13) aufweist und an ihr eine über den Umfang verstellbare Schnalle (17) angeordnet ist, mit der das Innenband (1;11) und das Außenband (2;12) gegeneinander festlegbar sind und das Maß der maximalen Verlänger- oder Ausziehbarkeit in Abhängigkeit von dem noch freien Teilstück des Außenbandes (2) einstellbar ist.

10. Halte- und Führungsvorrichtung nach einem der vorgenannten Ansprüche, **dadurch gekennzeichnet, dass** sie als Laufgeschirr für ein das Laufen erlernendes Kleinkind ausgebildet ist.

## Claims

1. Retaining and guiding arrangement, in particular for a dog or some other four-legged animal, comprising at least one band encircling a neck or a chest, the arrangement having an inwardly directed inner band (1;11) and an outer band (2;12) guided over the outside of the inner band, **characterized in that** the outer band (2;12) is designed as an elastic band or as an elastic tube and such that it can be lengthened elastically counter to a restoring force and **in that** the outer band (2;12) runs, over part of the circumference of the inner band (1;11), in an outer sleeve (3;13) which is connected to the inner band (1;11) .

2. Retaining and guiding arrangement according to Claim 1, **characterized in that** the elastic outer band (2;12) consists of rubber or stretch material.

3. Retaining and guiding arrangement according to one of the preceding claims, **characterized in that** the expansion of the elastic outer band (2;12) is very great in a first expansion region from an initial expansion, producing a small amount of prestressing, with an only slightly increasing tensile force and decreases to a pronounced extent in the end region of the maximum expansibility of the outer band (2;12) up to the expansion limit.

4. Retaining and guiding arrangement according to one of the preceding claims, **characterized in that** the expansibility and the expansion behaviour of the elastic outer band (2;12) is adapted to the size and/or the weight of an animal.

5. Retaining and guiding arrangement according to one of the preceding claims, **characterized in that** the outer sleeve (3;13) consists of synthetic woven fabric which has a border which is heat-sealed in the outlet region of the outer band (2;12).

6. Retaining and guiding arrangement according to one of the preceding claims, **characterized in that** at least a few of the surfaces of the inner band (1;11) and/or the outer sleeve (3;13) which are in contact with the elastic outer band (2;12) are provided with a sliding-action layer or coating.

7. Retaining and guiding arrangement according to one of the preceding claims, **characterized in that** a hand grip (4;14) is arranged between sections of the outer band (2;12) or around a section of the outer band (2;12).

8. Retaining and guiding arrangement according to one of the preceding claims, **characterized in that** it has a closure (5;15) and the ends of the outer band (2;12) are secured on the inner band (1;11) in the region of the closure (5;15).

9. Retaining and guiding arrangement according to one of the preceding claims, **characterized in that** it has through-passages (18) in its inner band (1;11) and/or in its outer sleeve (3;13), and arranged on it is a buckle (17) which can be adjusted over the circumference and by means of which the inner band (1;11) and the outer band (2;12) can be secured against one another and the extent of the maximum capacity for lengthening or extension can be set in dependence on the as yet free section of the outer band (2).

10. Retaining and guiding arrangement according to one of the preceding claims, **characterized in that** it is designed as a walking harness for a toddler learning to walk.

## Revendications

1. Dispositif de retenue et de guidage, en particulier pour un chien ou un autre quadrupède, constitué d'au moins une bande qui entoure le cou ou le torse, le dispositif présentant une bande intérieure (1; 11) tournée vers l'intérieur et une bande extérieure (2; 12) qui est guidée à l'extérieur de la première, **caractérisé en ce que** la bande extérieure (2; 12) est configurée comme bande élastique ou comme tube élastique qui peut s'allonger élastiquement en opposition à une force de rappel et **en ce que** sur une partie de la périphérie de la bande intérieure (1; 11), la bande extérieure (2; 12) s'étend dans un fourreau extérieur (3; 13) qui est relié à la bande intérieure (1; 11).

2. Dispositif de retenue et de guidage selon la revendication 1, **caractérisé en ce que** la bande extérieure élastique (2; 12) est réalisée en caoutchouc ou en tissu élastique dit "stretch".

3. Dispositif de retenue et de guidage selon l'une des revendications précédentes, **caractérisé en ce qu'**à partir d'un allongement initial qui crée une faible précontrainte lorsque la force de traction n'augmente que légèrement, l'allongement de la bande extérieure élastique (2; 12) est très grand jusque dans une première plage d'allongement, et diminue fortement jusqu'à la limite d'allongement dans la plage finale de l'allongement maximum de la bande extérieure (2; 12).

4. Dispositif de retenue et de guidage selon l'une des revendications précédentes, **caractérisé en ce que** l'aptitude à l'allongement et le comportement à l'allongement de la bande extérieure élastique (2; 12) sont adaptés à la taille et/ou au poids de l'animal.

5. Dispositif de retenue et de guidage selon l'une des revendications précédentes, **caractérisé en ce que** le fourreau extérieur (3; 13) est réalisé en un tissu en matière synthétique qui présente un bord qui est scellé à chaud dans la région de la sortie de la bande extérieure (2; 12).

6. Dispositif de retenue et de guidage selon l'une des revendications précédentes, **caractérisé en ce qu'**au moins certaines surfaces de la bande intérieure (1; 11) et/ou du fourreau extérieur (3; 13) qui sont en contact avec la bande extérieure élastique (2; 12) sont dotées d'une couche ou d'un revêtement coulissant.

7. Dispositif de retenue et de guidage selon l'une des revendications précédentes, **caractérisé en ce qu'**une poignée (4; 14) est disposée entre des parties de la bande extérieure (2; 12) ou autour d'une partie de la bande extérieure (2; 12).

8. Dispositif de retenue et de guidage selon l'une des revendications précédentes, **caractérisé en ce qu'**il présente une fermeture (5; 15) et **en ce que** les extrémités de la bande extérieure (2; 12) sont fixées sur la bande intérieure (1; 11) dans la région de la fermeture (5; 15).

9. Dispositif de retenue et de guidage selon l'une des revendications précédentes, **caractérisé en ce qu'**il présente des perforations (18) dans sa bande intérieure (1; 11) et/ou dans son fourreau extérieur (3; 13), **en ce qu'**une boucle (17) ajustable par laquelle la bande intérieure (1; 11) et la bande extérieure (2; 12) peuvent être fixées l'une contre l'autre est disposée autour de sa périphérie et **en ce que** la valeur de l'allongement ou de l'extension maximal peut être réglée en fonction de la partie restante libre de la bande extérieure (2).

10. Dispositif de retenue et de guidage selon l'une des revendications précédentes, **caractérisé en ce qu'**il est configuré comme harnais pour un petit enfant apprenant à marcher.
